# EUROPEAN PATENT SPECIFICATION

(11) **EP 4 206 533 B1**
(45) Date of publication and mention of the grant of the patent: **09.04.2025**
(21) Application number: 22188903.3
(22) Date of filing: 04.08.2022
(51) Int. Cl.: F23R 3/06, F23R 3/14, F23R 3/28

(54) **FUEL NOZZLE AND SWIRLER ASSEMBLY FOR AN ENGINE**
ANORDNUNG EINER KRAFTSTOFFDÜSE UND EINES DRALLERZEUGERS FÜR EINEN MOTOR
ASSEMBLAGE DE BUSE DE CARBURANT ET D'UN DISPOSITIF DE TOURBILLONNEMENT POUR UN MOTEUR

(30) Priority: 30.12.2021 US 202163294925 P; 11.03.2022 US 202217692411
(43) Date of publication of application: 05.07.2023
(60) Divisional application: 25161681.9
(73) Proprietor: General Electric Company, Evendale, OH 45215 (US)
(72) Inventor: VISE, Steven, Schenectady, 12345 (US); NAIK, Pradeep, Schenectady, 12345 (US); VUKANTI, Perumallu, Schenectady, 12345 (US); BUCARO, Michael, Schenectady, 12345 (US); PATRA, Ajoy, Schenectady, 12345 (US); CHIRANTHAN, R Narasimha, Schenectady, 12345 (US); BENJAMIN, Michael, Schenectady, 12345 (US); GIRIDHARAN, Manampathy, Schenectady, 12345 (US); NATH, Hiranya Kumar, Schenectady, 12345 (US)
(74) Representative: Openshaw & Co.

(56) References cited:
- US-A- 4 842 197
- US-A1- 2010 175 381
- US-A1- 2012 266 602
- US-A1- 2012 305 673
- US-A1- 2013 283 805
- US-A1- 2014 013 764
- US-A1- 2014 311 150
- US-A1- 2018 156 450
- US-A1- 2019 078 784

## Description

### FIELD

The present invention relates to a fuel nozzle and swirler assembly for an engine.

### BACKGROUND

An engine, such as a turbine engine that includes a turbine, is driven by combustion of a combustible fuel within a combustor of the engine. The engine utilizes a fuel nozzle to inject the combustible fuel into the combustor. A swirler provides for mixing the fuel with air in order to achieve efficient combustion.

US 2013/283805 relates to a fuel nozzle. The fuel nozzle includes a center body configured to receive a first portion of air and to deliver the air to a combustion region. The fuel nozzle also includes a swirler configured to receive a second portion of air and to deliver the air to the combustion region. The swirler includes an outer shroud wall, an inner hub wall, and a swirl vane. The swirl vane includes a radial swirl profile at a downstream edge of the swirl vane. The radial swirl profile includes a region extending from the outer shroud wall to a first transition point and a second region extending from the transition point to the inner hub wall. At least one of the first and second regions is substantially straight and at least one of the first and second regions is arcuate.

US 2012/305673 relates to a fuel nozzle and swirler assembly for an engine, comprising a fuel nozzle including a fuel passage defining a longitudinal axis and a swirler. The swirler comprises a forward wall, an aft wall spaced from the forward wall to define a swirler passage therebetween, and a set of vanes provided in the swirler passage. The set of vanes extends between the forward wall and the aft wall and is configured to impart a tangential component to a volume of fluid passing through the swirler.

US 4,842,197 relates to a fuel nozzle and swirler assembly for an engine, comprising a fuel nozzle including a fuel passage defining a longitudinal axis and a swirler. The swirler comprises a forward wall, an aft wall spaced from the forward wall to define a swirler passage therebetween and a set of vanes provided in the swirler passage extending between the forward wall and the aft wall. The forward wall is arranged at an incline angle relative to a radius defined orthogonal to the longitudinal axis.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of an engine in accordance with an exemplary embodiment of the present disclosure.
FIG. 2 is a cross section view of a fuel nozzle assembly and swirler of the engine of FIG. 1 including a swirler vane having an axial cutback, not in accordance with the present invention.
FIG. 3 is cross section view of an alternative fuel nozzle assembly including a swirler with radial vanes in combination with an axial outlet, also not in accordance with the present invention.
FIG. 4 is a side view of a swirler for a fuel nozzle assembly including a forward wall, an aft wall, and vanes extending between the forward and aft walls in accordance with an exemplary embodiment of the present disclosure.
FIG. 5 is a section view taken across section V-V of FIG. 4 in accordance with an exemplary embodiment of the present disclosure.
FIG. 6 is a section view taken across section VI-VI of FIG. 4 in accordance with an exemplary embodiment of the present disclosure.
FIG. 7 is a section view taken across section VII-VII of FIG. 4 in accordance with an exemplary embodiment of the present disclosure.
FIG. 8 is a section view showing an alternative profile for a forward wall and an aft wall for a swirler, including a forward face incline for the forward wall in accordance with an exemplary embodiment of the present disclosure.
FIG. 9 is a section view showing another alternative profile for a forward wall and aft wall for a swirler, including an aft face incline for the aft wall in accordance with an exemplary embodiment of the present disclosure.
FIG. 10 is a section view showing yet another alternative profile for a forward wall and an aft wall for a swirler, including a forward face incline and an aft face incline for the forward wall and the aft wall, respectively in accordance with an exemplary embodiment of the present disclosure.
FIG. 11 is a section view showing an alternative profile for a forward wall and an aft wall for a swirler, defining a converging area and a diverging area for the swirler in accordance with an exemplary embodiment of the present disclosure.
FIG. 12 is a section view of an outlet of a swirler, such as the swirler of FIG. 3, including a set of vanes having a constant cross section extending between a forward wall and an aft wall in accordance with an exemplary embodiment of the present disclosure.
FIG. 13 is a section view of an alternative swirler including a diverging area between the vanes at an outlet extending from the forward wall to an aft wall in accordance with an exemplary embodiment of the present disclosure.
FIG. 14 is a section view of another alternative outlet for a swirler, including a converging area between the vanes at an outlet extending from forward to aft in accordance with an exemplary embodiment of the present disclosure.
FIG. 15 is a section view of yet another alternative outlet for a swirler, including a converging area then a diverging area for an outlet of the vanes extending from the forward wall to the aft wall in accordance with an exemplary embodiment of the present disclosure.
FIG. 16 is a section view of yet another alternative outlet for a swirler, including a diverging area then a converging area for an outlet of vane extending from a forward wall to an aft wall in accordance with an exemplary embodiment of the present disclosure.
FIG. 17 is a section view of another fuel nozzle assembly, including a converging cross-sectional area for an axial passage for a swirler in accordance with an exemplary embodiment of the present disclosure.
FIG. 18 is a section view of yet another fuel nozzle assembly, including a converging cross-sectional area for a swirler, downstream of both swirler vanes and a fuel nozzle in accordance with an exemplary embodiment of the present disclosure.

### DETAILED DESCRIPTION

Aspects of the disclosure herein are directed to a fuel nozzle and swirler architecture located within an engine component, and more specifically to a fuel nozzle structure configured for use with heightened combustion engine temperatures, such as those utilizing a hydrogen fuel other mixes thereof. For purposes of illustration, the present disclosure will be described with respect to a turbine engine for an aircraft with a combustor driving the turbine. It will be understood, however, that aspects of the disclosure herein are not so limited and may have general applicability within an engine, including but not limited to turbojet, turboprop, turboshaft, and turbofan engines, as well as in non-aircraft applications, such as other mobile applications and non-mobile industrial, commercial, and residential applications. The fuel nozzle and swirler assembly according to the invention is defined in claim 1 and claim 5.

Reference will now be made in detail to the fuel nozzle assembly architecture, portions thereof, or alternative embodiments thereof, and in particular the fuel nozzle and swirler for providing fuel to the combustor located within an engine, examples of which are illustrated in the accompanying drawings as a turbine. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The terms "forward" and "aft" refer to relative positions within an engine or vehicle, and refer to the normal operational attitude of the engine or vehicle. For example, with regard to an engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "flame holding" relates to the condition of continuous combustion of a fuel such that a flame is maintained along or near to a component, and usually a portion of the fuel nozzle and swirler assembly as described herein, and the term "flashback" relate to a retrogression of the combustion flame in the upstream direction.

The term "fluid" may be a gas or a liquid. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The combustor introduces fuel from a fuel nozzle, which is mixed with air by a swirler, and then combusted within the combustor to drive the engine. Increases in efficiency and reduction in emissions have driven the need to use fuel that burns cleaner and at higher temperatures. There is a need to improve durability of the combustor under these operating parameters, such as improved flame control to prevent flame holding on the fuel nozzle and swirler components.

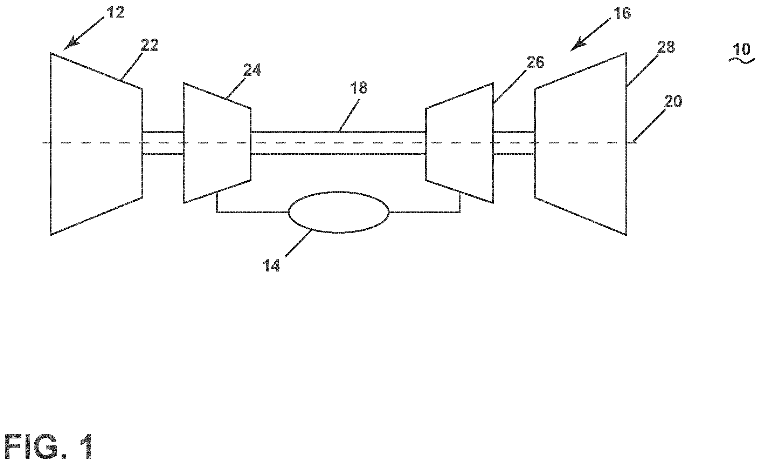

FIG. 1 is a schematic view of an engine 10. As a non-limiting example, the engine 10 can be used within an aircraft. The engine 10 can include, at least, a compressor section 12, a combustion section 14, and a turbine section 16. A drive shaft 18 rotationally couples the compressor and turbine sections 12, 16, such that rotation of one affects the rotation of the other, and defines a rotational axis 20 for the engine 10.

The compressor section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 can operatively couple the LP compressor 22, the HP compressor 24, the LP turbine 28 and the HP turbine 26 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about the engine 10. It will be appreciated that the representation of the compressor section 12 is merely schematic and that there can be any number of stages. Further, it is contemplated, that there can be any other number of components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The blades for a stage of the turbine section 16 can be mounted to a disk which is mounted to the drive shaft 18. Each set of blades for a given stage can have its own disk. The vanes of the turbine section can be mounted to the casing in a circumferential manner. It is noted that there can be any number of blades, vanes and stages as the illustrated turbine section is merely a schematic representation. Further, it is contemplated, that there can be any other number of components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the engine 10 via an exhaust section (not illustrated) downstream of the turbine section 16. The driving of the LP turbine 28 drives the LP spool to rotate the fan (not illustrated) and the LP compressor 22. The pressurized air and the combustion gases can together define a working airflow that flows through the fan, compressor section 12, combustion section 14, and turbine section 16 of the engine 10.

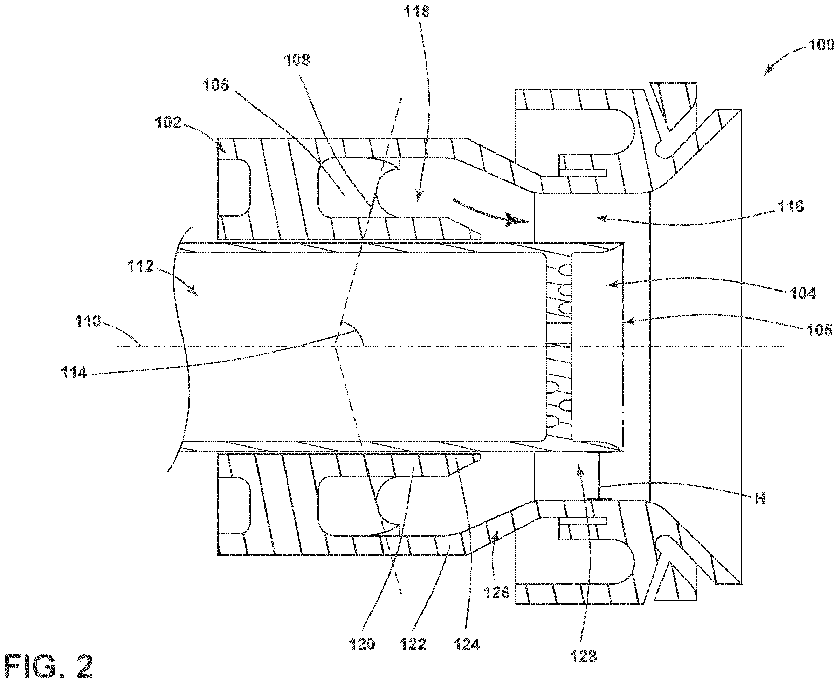

FIG. 2 shows a fuel nozzle assembly 100 including a swirler 102 and a fuel nozzle 104 terminating at a nozzle tip 105, including a fuel passage 112 defining a longitudinal axis 110, and provided at least partially interior of the swirler 102. The swirler 102 includes a set of vanes 106 that impart a swirl as a helical or tangential component to an airflow passing along the vanes 106. The swirling air is directed through an exhaust passage 118 with the air exhausting at an outlet 116. The vanes 106 includes a leading edge (not shown) and a trailing edge 108, and extend between a radially-inner wall 120 and a radially-outer wall 122 defining the exhaust passage 118 therebetween. The trailing edge 108 can be cut back at a cutback angle 114 relative to the longitudinal axis 110 defined through the fuel nozzle 104. In another non-limiting example, the trailing edge cutback angle 114 can be relative to the engine centerline 20 of FIG. 1. The cutback angle 114 can be between 0-degrees and 90-degrees, or can be between 30-degrees and 90-degrees in another non-limiting example, or any other non-zero angle, while other angles or ranges thereof are contemplated.

In operation, a flow of air can be provided by the swirler 102, imparted with a tangential swirling component passing axially about the fuel nozzle 104. The vanes 106 impart a swirl, or tangential or helical component, to the air, such that the air swirls as it is emitted from the swirler 102. The cutback angle 114 for the trailing edge 108 creates a higher angular component to the airflow at an outer diameter of the exhaust passage 118, defining a lower angular component nearer to an inner diameter of the exhaust passage 118, relative to the outer diameter. Additionally, the cutback angle 114 creates a high axial velocity component nearer to the inner diameter of the exhaust passage 118, while having a relatively lesser axial velocity component nearer to the outer diameter. The higher swirl component at the outer diameter prevents or reduces flame holding on the fuel nozzle assembly 100, while the higher axial velocity component at the inner diameter prevents flame holding and flashback on the outer surface or end of the fuel nozzle 104. In one non-limiting example, it is contemplated that the vanes 106 or the swirler 102 can be part of or integral with the fuel nozzle 104, as a unitary component. The cutback angle 114 can start at any radial vane location, relative to the longitudinal axis 110, and it is contemplated that the cutback angle 114 can increase extending toward the inner diameter of the swirler 102, such that the trailing edge 108 is curved. In another example, the cutback angle 114 can start at any location between 0%-90% of the passage height between the radially-inner and radially-outer walls 120, 122, where 100% is aligned with the radially outer wall 122 in the radial direction, and 0% is aligned with the radially-inner wall 120.

Additionally, the nozzle tip 105 can be positioned aft of swirler 102. Such an aft positioning can provide sufficient space for the wake of the airflow provided from the swirler 102 to mix, aft of the swirler 102 and the fuel nozzle 104, which provides to reduce or eliminate flame holding and flashback at the nozzle tip 105.

A foot 124 of the radially inner wall 120 directs the air to slide along the foot 124 and transitioning to along the outer diameter of the fuel nozzle 104 to significantly reduce wakes at aft edge of the radially inner wall 120. The angle on the foot 124 can be defined from 5-degress to 60-degrees with respect to the longitudinal axis 110 or an axis parallel thereto, to control flow velocity on the outer diameter of the fuel nozzle 104, as well as reduce wakes the aft edge of the radially inner wall 120. The radially outer wall 122 includes a converging wall section 126 to direct the flow towards the fuel nozzle 104 to create high velocity on the fuel nozzle outer diameter to avoid flame holding. The angle for the converging wall section 126 can be between 1-degree and 80-degrees, or 2-degrees and 80-degrees, relative to the longitudinal axis 110, while other ranges are contemplated such as any non-zero angle. Convergence of the swirler passage area defined by the foot 124 and the converging wall section 126 is followed by a constant area section 128 to create a well developed velocity profile at the outlet 116 of the exhaust passage 118 to keep the flame away from fuel nozzle assembly 100. The length of the constant area section 128 can be from 0.3 H to 8.0 H, where H is the height of the exhaust passage 118 defined between radially-outer wall 122 and fuel nozzle 104 located aft of the foot 124 and the converging wall section 126. The tip of the fuel nozzle 104 can be positioned anywhere in constant area section 128 or converging wall section 126 of the swirler assembly downstream of the swirler vanes 106.

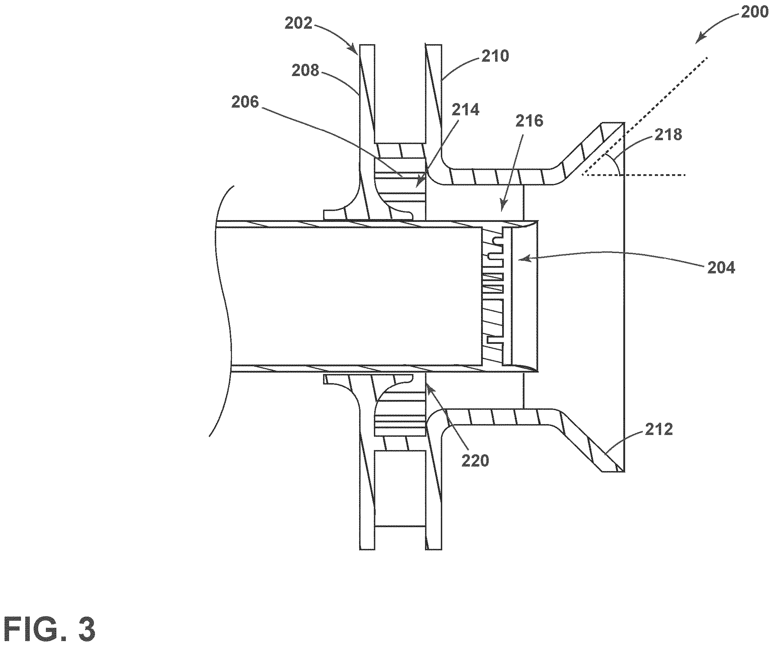

Turning to FIG. 3, another exemplary fuel nozzle assembly 200 includes a swirler 202 and a fuel nozzle 204. The swirler 202 includes a set of circumferentially arranged radial vanes 206 provided between a front wall 208 and a rear wall 210. The swirler 202 turns airflow from a radial direction at the radial vanes 206 to an axial direction at an axial passage 216 that circumscribes the fuel nozzle 204. A flare cone 212 extends from the swirler 202 downstream of the axial passage 216. In one example, the flare cone 212 can extend at an angle 218 between -60-degrees (negative 60-degrees) to 80-degrees, relative to the longitudinal axis of the fuel nozzle 204, where a negative angle defines a converging cross-sectional area, and a positive angle defines a diverging cross-sectional area, and zero-degrees represents a constant cross section for the flare cone 212. In alternative examples, it is contemplated that the flare cone 212 can include a constant, diverging, or converging cross-sectional area, and need not be limited as shown. In another alternative example, it is contemplated that no flare is included.

The radial vanes 206 can be arranged to introduce a radial flow into the swirler 202 which exhausts at a trailing edge 220 at an opening 214, sometimes referred to as a nozzle between adjacent radial vanes 206, defining an outlet for the nozzle. The openings 214 can be oriented tangentially to impart a swirl to the flow of air provided from the swirler 202. The tangential openings 214 create a high velocity component for the airflow along the axial direction along the outer diameter of the axial passage 216, which prevents flame holding against the flare cone 212. Additionally, the tangential openings 214 provide a high velocity component along the inner diameter of the axial passage 216, which prevents flame holding or flashback at the fuel nozzle 204.

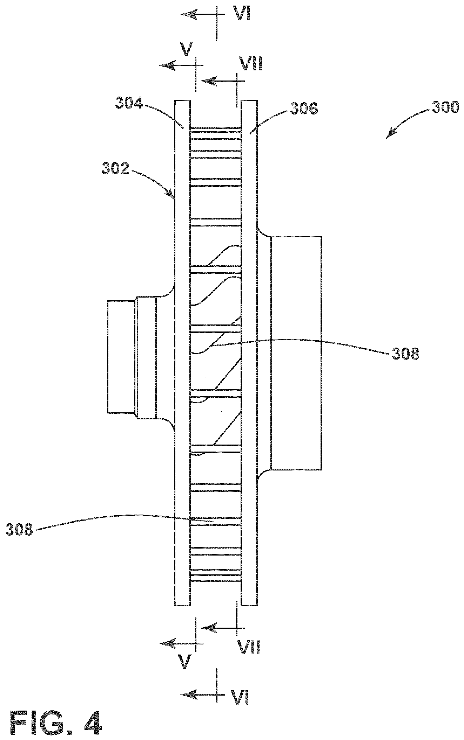

Turning to FIG. 4, a swirler 300 for a fuel nozzle assembly, such as the fuel nozzle assemblies as described herein, includes a housing 302 having a forward wall 304 and an aft wall 306. A set of vanes 308 extend between the forward wall 304 and the art wall 306 for imparting a tangential swirl to an airflow provided to a fuel nozzle assembly.

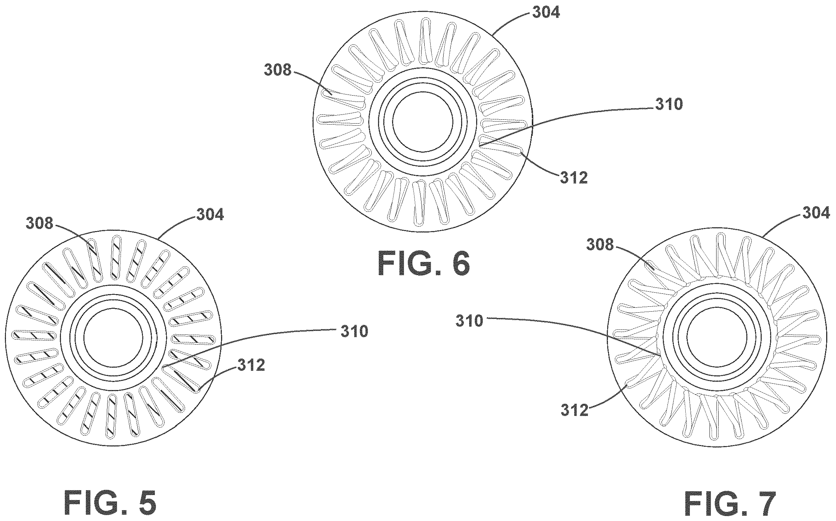

Turning to FIG. 5, taken along section V-V of FIG. 4, near the forward wall 304, showing vanes 308 that have a radial arrangement relative to the annular forward wall 304. FIG. 6 shows a section view taken along section VI-VI of FIG. 4, which illustrates the vanes 308 located between the forward wall 304 and the aft wall 306 (see FIG. 4, aft wall 306 not shown in FIGS. 5-7), showing the vanes 308 turning from a radial direction toward a tangential direction, with a trailing edge 310 of each vane 308 turning tangentially. FIG. 7 shows a cross-sectional view taken along section VII-VII of FIG. 4, which shows a section near to the aft wall 306 showing the trailing edge 310 of the vanes 308 turned further tangentially, while less tangentially extending toward a leading edge 312, comparatively with the trailing edge 310. The vanes 308, as shown as radial in section V-V, are arranged along a radius extending from the center of the swirler, before turning to radial, as shown in FIGS. 6 and 7. The axial position where the vanes 308 begin to turn from radial to axial can vary between 0% to 80% of the total vane height, where the vane height is defined between the forward and aft walls 304, 306 of the swirler 300.

As the vanes 308 turn tangentially along the trailing edge 310, an airflow directed along the vanes 308 provides for peak airflow velocity before interacting with the fuel flow provided by a fuel nozzle. The tangential curve for the trailing edge 310 can provide a high tangential velocity component along the outer diameter of an axial swirler passage downstream from the swirler 300, which prevents flame holding on the fuel nozzle assembly or a downstream flare cone. The forward radial component of the vanes 308, defined by the geometry as shown in section V-V in FIG. 5, does not have a tangential component of velocity for the flow, and creates high axial velocity as the flow turns towards a fuel nozzle. This high axial velocity created by forward radial component of the vanes 308 results in high axial velocity at the aft end of the fuel nozzle, preventing flame holding on the tip of the fuel nozzle.

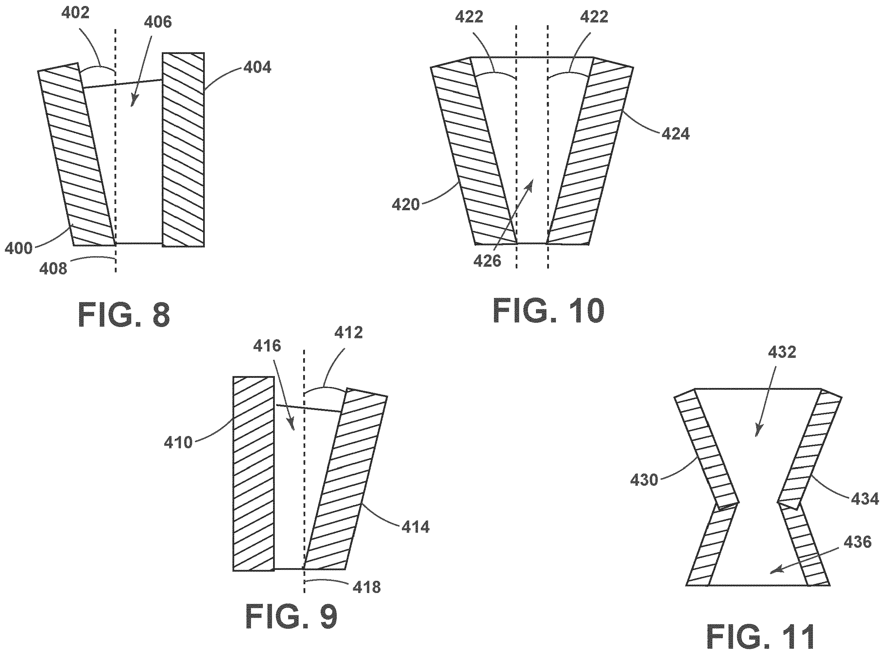

FIG. 4 shows the forward wall 304 and the aft wall 306 that are aligned parallel to one another, or orthogonal to a longitudinal axis for the fuel nozzle, or both. FIGS. 8-11, show non-limiting alternative examples, which can be utilized to vary the velocity profile for the airflow provided by a swirler. FIG. 8 shows a forward wall 400 that includes an incline which can be defined by an incline angle 402, defined relative to an aft wall 404, or a radius 408 extending from a longitudinal axis of the fuel nozzle and swirler assembly, or the forward wall 400 can be defined non-orthogonal to the longitudinal extent of a fuel nozzle utilized with the swirler including the forward wall 400. Similarly, FIG. 9 shows an aft wall 414 that includes an incline defined by an incline angle 412, relative to a radius 418 or a forward wall 410. The forward or aft incline of FIGS. 8 or 9 can define a converging cross-sectional area 406, 416 for a swirler, which can provide for increasing velocity for the airflow passing through the swirler, controlling where the local velocity profile can increase or decrease based upon the angle or incline of the wall, which can improve the velocity profile for the airflow and reduce or prevent flame holding at the fuel nozzle assembly. As the passage between forward wall 410 and aft wall 414 is varied, a span of vanes provided in the swirler between the forward and aft walls 410, 414 can reduce in the aft direction, which helps to achieve desired velocity profile as the air flow exits the vanes. The incline angle 402, 412 can be between 0-degrees and 45-degrees, while other ranges are contemplated

In another example, FIG. 10 shows a forward wall 420 and an aft wall 424 that are both inclined at an incline angle 422, being offset from orthogonal, relative to the longitudinal extent of a fuel nozzle or an engine centerline, in non-limiting examples. The inclined forward and aft walls 420, 424 of also provide a converging cross-sectional area 426 to provide an increased velocity for the airflow provided by a swirler. The incline angle 422 can be from 0-degrees to 45-degrees, for example.

FIG. 11 shows another example that includes a forward wall 430 and an aft wall 434 that both converge, defining a decreasing cross-sectional area 432, transitioning to diverging portions of the forward wall 430 and aft wall 434, defining a diverging cross-sectional area 436. Instead of a planar surface it is possible that the forward and aft walls 430, 434 can be curved. Radial height of the passage at which transitioning between converging to diverging area occurs can be between 20% to 80% of the total radial height of the swirler passage, for example.

It should be appreciated that additional combinations exist, where the forward wall or the aft wall include an incline or a decline, or a curvature for the wall, either concave or convex, that defines an increasing or decreasing cross-sectional area, or any combination thereof among both the forward wall and the aft wall individually, irrespective of the other wall or in complement with the other wall. It should be appreciated that the forward and aft walls for a swirler can be angled, individually or together, or in complement. Additionally, each wall can be angled, non-angled, or curved discretely to define converging or diverging portions for the swirler, which can define complex airflow profiles for a swirler.

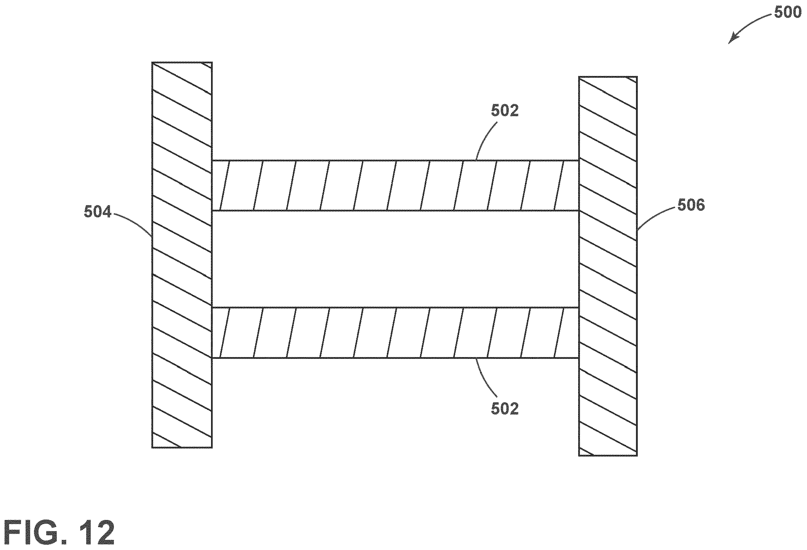

FIG. 12 shows an enlarged, section view of a portion of an exemplary swirler 500 including two vanes 502 extending between a forward wall 504 and an aft wall 506. Each vane 502 can include a constant cross-sectional area extending between the forward wall 504 and the aft wall 506.

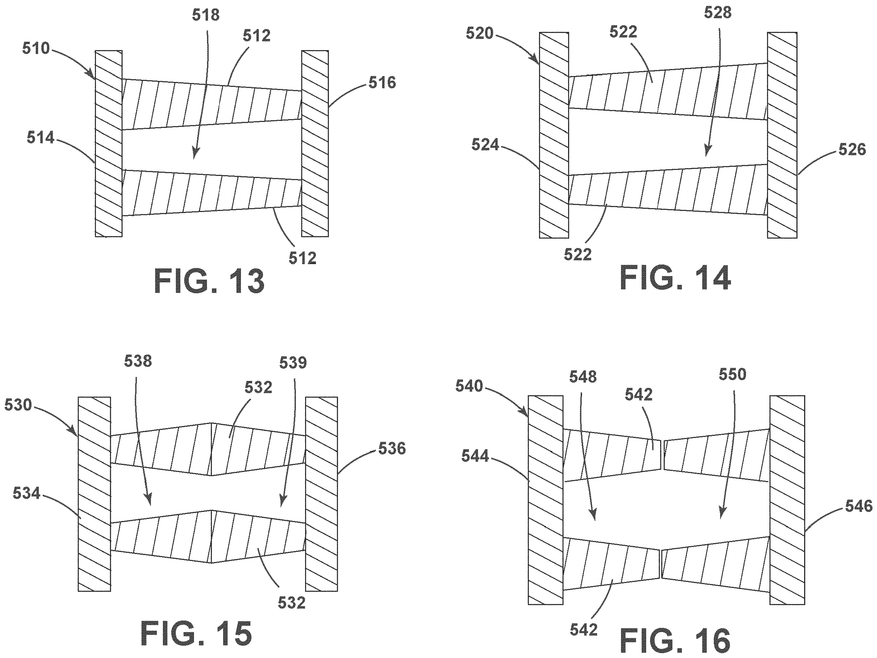

FIGS. 13-16 illustrate alternative examples for the cross-sectional profile for a swirler with vanes defined between forward and aft walls. FIG. 13 illustrates a swirler 510 with vanes 512 that include an increasing cross-sectional flow area 518 extending in a direction from a forward wall 514 to an aft wall 516, or a decreasing vane thickness extending from the forward wall 514 to the aft wall 516. This geometry creates lower flow area at the forward wall 514 and relatively higher flow area at the aft wall 516 of the vane passage which results in high velocity on the outer diameter of an axial swirler passage, such as that described in FIG. 3, and relatively lower velocity in the axial swirler passage on the fuel nozzle outer diameter. In other words, the geometry creates a peak velocity profile at a radial exterior of the axial swirler passage. A high velocity flow on the outer diameter of the swirler or flare cone prevents flame holding on the flare cone.

FIG. 14 illustrates a swirler 520 with vanes 522 that include a decreasing cross-sectional flow area 528 or an increasing vane thickness, extending from a forward wall 524 to an aft wall 526. This geometry creates an peak radially-inner velocity profile at the axial swirler passage. A high velocity component on the outer diameter of the fuel nozzle reduces or eliminates flame holding on the fuel nozzle.

FIG. 15 includes a swirler 530 with vanes 532 that include a profile that includes a decreasing cross-sectional flow area 538 and then an increasing cross-sectional flow area 539 or an increasing vane thickness transitioning to a decreasing vane thickness, extending between a forward wall 534 and an aft wall 536. This geometry creates a dual peak velocity profile with peak velocities on both the inner diameter and the outer diameter of swirler axial passage. This creates a high velocity flow near both flare cone and fuel nozzle wall preventing flame holding on both surfaces.

FIG. 16 includes a swirler 540 with vanes 542 that include an increasing cross-sectional flow area 548 which transitions to a decreasing cross-sectional flow area 550, or an increasing vane thickness transitioning to a decreasing vane thickness, extending from a forward wall 544 to an aft wall 546. This geometry creates center peak velocity profile at swirler axial passage that prevents flame holding or flashback in the center of the swirler axial passage. Transitioning of the vane thickness can occur anywhere from 20% to 80% of the length defined from forward wall 544 to aft wall 546 of the radial swirler passage. It is possible that the vane surface can be curved surfaces instead of a planar surface or combinations thereof are possible. A decreasing or converging cross-sectional area can be utilized to accelerate the flow, while the increasing or diverging cross-sectional area can be utilized to decelerate the flow, which can be directed to the inner or outer diameters of the swirler axial passage in order to reduce the occurrence of flame holding on the fuel nozzle assembly. Additionally, while the cross-sectional view is shown nearer to an exit arrangement for a swirler assembly, it should be appreciated that the cross-section can be defined anywhere between the leading edge and the trailing edge of the particular vane, and it is further contemplated that such cross-sectional variation can occur in the direction extending from a leading edge to a trailing edge, as opposed to or in complement with the variation extending between the forward and aft walls 544, 546.

A variable profile for the vanes extending between a forward and an aft wall can provide for defining different velocity profiles for the swirling air emitted from the swirler. The variable velocity profiles can be utilized to prevent flame holding against portions of the fuel nozzle assembly, and the profiles can be utilized to develop complex flow profiles to prevent flame holding. Furthermore, different velocity profiles can be used to control mixing of fuel and air in the fuel nozzle assembly, as well as in the primary zone of the downstream combustor.

In another example, it is contemplated that the vanes, such as those shown in FIGS. 12-16, can include a varying cross-sectional in the radial direction, being orthogonal to a direction extending between the forward wall and the aft wall. In this way, similar to that disclosed in the axial direction, the vane can converge, diverge, remain constant, or any combination thereof in the radial direction. Further yet, it is contemplated that the vanes can include a varying cross section in both the radial and the axial direction. For example, a vane can be converging from the forward wall to the aft wall, in the axial direction, while that same vane can be diverging in the radial direction, orthogonal to the axial direction. In this way, it should be appreciated that the profile for the vane can be used to determine or define a velocity profile, which can be tailored to the fuel nozzle assembly, or the particular fuel type, which can be used to reduce or eliminate flame holding or flashback, as well as mixing fuel and air to increase efficiency.

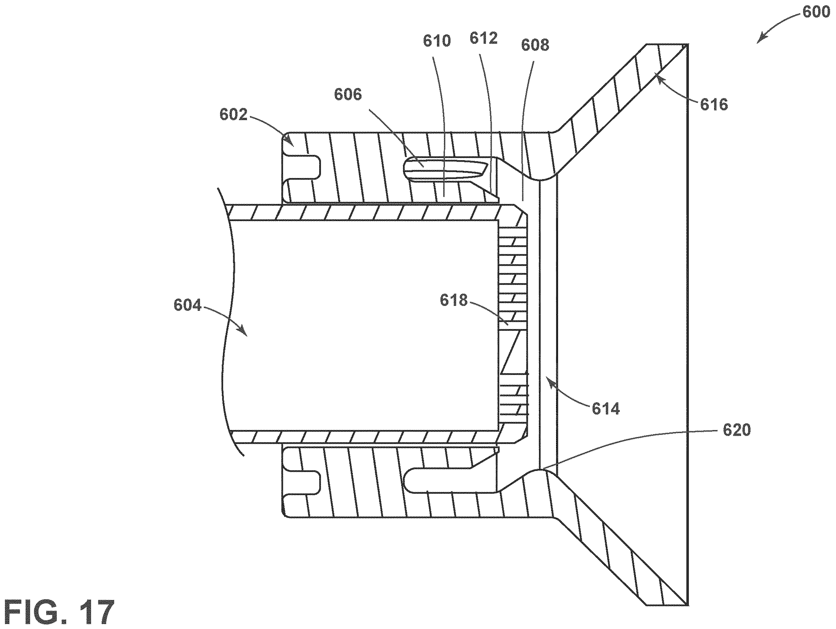

FIG. 17 shows a fuel nozzle assembly 600 with a swirler 602 circumscribing a fuel nozzle 604. The swirler 602 includes an axial passage 606 that exhausts about the fuel nozzle 604. The axial passage 606 can include a converging portion 608. The axial passage 606 can be spaced from the fuel nozzle 604 by a swirler wall 610. The swirler wall 610 can include an angled portion 612 which defines the converging portion 608. The converging portion 608 provides for increasing the velocity for the swirler air exhausted from the axial passage 606, which prevents flame holding on the fuel nozzle assembly 600. A throat 614 is defined in the passage downstream of the fuel nozzle 604 and upstream of a flare cone 616 where the flow is accelerated to prevent the flame from flashing back on the fuel nozzle 604. The location of the throat 614 from the fuel nozzle 604 can be from 0D to 30D where D is the diameter of a fuel orifice hole 618 at the end of the fuel nozzle 604, and in one example, D can be the diameter of the smallest fuel orifice hole.

A protuberance 620 can be formed in the swirler 602. The protuberance can be rounded or linear, or combinations thereof, while any suitable shape is contemplated. The protuberance 620 defines a converging cross-section downstream of the angled portion 612, which can define throat 614 as the smallest cross-sectional area for the fuel nozzle assembly 600 downstream of the fuel nozzle 604 and upstream of the flare cone 616. The protuberance 620 can be positioned downstream from the fuel nozzle 604 by between 0D and 30D, where D is the diameter of the fuel orifice hole 618, and here 0D is aligned with the end of the fuel nozzle.

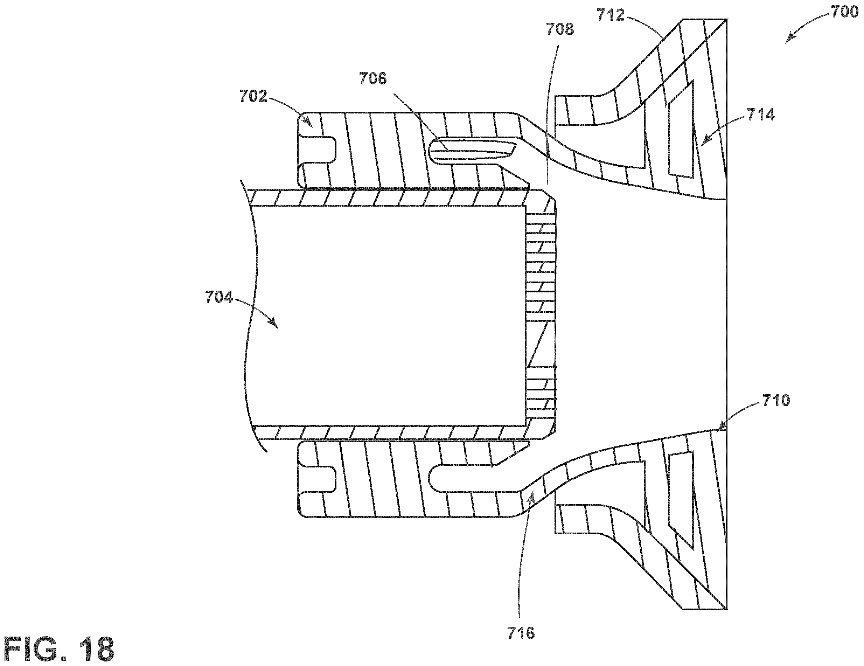

FIG. 18 includes a fuel nozzle assembly 700 with a swirler 702 circumscribing a fuel nozzle 704. The swirler 702 includes an axial passage 706, which includes a converging portion 708 defining a converging section exhausting about the fuel nozzle 704. The swirler 702 includes a downstream housing portion 716 extending aft of the fuel nozzle 704, defining a truncated nozzle 710 encasing a mix of air from the swirler 702 and fuel from the fuel nozzle 704. The truncated nozzle 710 provides for additional space between the truncated nozzle 710 and an exterior flare cone 712, which provides space for an acoustic damper 714 between the truncated nozzle 710 and the flare cone 712. The converging cross-sectional area defined by the truncated nozzle 710 accelerates the flow of the fuel and air emitted from the fuel nozzle 704 and the swirler 702 to prevent flame holding or flashback, while the damper 714 can be utilized to reduce vibration generated by the fuel nozzle assembly 200, providing further flame control to prevent flame holding or flashback. In this way, the damper 714 can be an acoustic damper, which can dampen the sound generated by the engine for quieter operation, as well as reducing or absorbing vibrational energy with the flare cone 712 and damper 714. The damper volume can be the same or different for different fuel nozzle assemblies 700 in annular arrangement about a combustor, to address broader range of combustion dynamic frequencies. It is possible that there can be partitioning of volume within each individual damper volume placed around swirler 702, where discrete volumes can be tuned to particular frequencies. The damper 714 can be extended above flare cone 712 into the combustion chamber.

It should be appreciated that the flare can be made as diverging, constant, or converging in the flow direction, which can prevent flame holding or flashback, as well as expand the mixture of fuel and air, which can improve efficiency and reduce emissions. In another example, it is contemplated that there is no flare.

It should be appreciated that fuels with higher burn temperature and higher burn speeds, or lighter weights relative to air or other fuels, can provide for reducing or eliminating emissions, or improving efficiency without increasing emissions. In one example, hydrogen fuels or hydrogen-based fuels can be utilized, which can eliminate carbon emissions without negative impact to efficiency. Such fuels, including hydrogen, require greater flame control, in order to prevent flame holding or flashback on the combustor hardware. The aspects described herein can increase combustor durability, while current combustors can fail to provide durability to utilize such fuels.

As will be appreciated from the description herein, the aspects can be interchanged or mixed, and that the disclosure is not limited to the embodiments described herein. A person having ordinary skill in the art would recognize that the aspects described herein can be interchanged, combined, added, or otherwise mixed to form additional embodiments.

This written description uses examples to disclose the present disclosure, including the best mode, and also to enable any person skilled in the art to practice the disclosure, including making and using any devices or systems and performing any incorporated methods. The patentable scope of the disclosure is defined by the claims.

## Claims

1. A fuel nozzle and swirler assembly (100) for an engine (10), the fuel nozzle and swirler assembly (100) comprising:
a fuel nozzle (102) including a fuel passage (112) defining a longitudinal axis (110);
a swirler (300) comprising:
a forward wall (304),
an aft wall (306) spaced from the forward wall (304) to define a swirler passage (118) therebetween,
a set of vanes (308), provided in the swirler passage (118) extending between the forward wall (304) and the aft wall (306), the set of vanes (308) configured to impart a tangential component to a volume of fluid passing through the swirler (300),
wherein each vane (308) of the set of vanes (308) turns from a radial orientation at the forward wall (304) to a tangential orientation at the aft wall (306), and
a flare cone (212) extending from the swirler and arranged at an angle (218) relative to the longitudinal axis (110);
**characterized in that**
the swirler (300) circumscribes the fuel nozzle (104).

2. The fuel nozzle and swirler assembly (100) of claim 1 wherein the forward wall (304) is arranged at an angle (402) offset from an axis defined orthogonal to the longitudinal axis (110).

3. The fuel nozzle and swirler assembly (100) of claim 1 or 2, wherein the radial orientation is defined in a radial direction orthogonal to the longitudinal axis (110).

4. The fuel nozzle and swirler assembly (100) of claim 3 wherein the tangential orientation is in a direction tangent to the radial direction.

5. A fuel nozzle and swirler assembly (100) for an engine (10), the fuel nozzle and swirler assembly (100) comprising:
a fuel nozzle (104) including a fuel passage (112) defining a longitudinal axis (110); and
a swirler (102)
comprising:
a forward wall (400),
an aft wall (404) spaced from the forward wall (400) to define a swirler passage (118) therebetween,
a set of vanes (206) provided in the swirler passage (118) extending between the forward wall (400) and the aft wall (404), for imparting a tangential component to a volume of fluid passing through the swirler (102),
wherein at least one of the forward wall (400) and the aft wall (402) is arranged at an incline angle (402) relative to a radius defined orthogonal to the longitudinal axis (110); and
a flare cone (212) extending from the swirler and arranged at an angle (218)
relative to the longitudinal axis (110);
**characterized in that**
the swirler (300) circumscribes the fuel nozzle (104).

6. A fuel nozzle and swirler assembly (100) according to any one of claims 1 to 5, wherein the angle (218) is negative, such that the flare cone (212) converges, or is positive, such that the flare cone (218) diverges.

## Patentansprüche

1. Brennstoffdüsen- und Verwirbleranordnung (100) für ein Triebwerk (10), die Brennstoffdüsen- und Verwirbleranordnung (100) umfassend:
eine Brennstoffdüse (102), die einen Brennstoffdurchgang (112) einschließt, der eine Längsachse (110) definiert;
einen Verwirbler (300), umfassend:
eine vordere Wand (304),
eine hintere Wand (306), die von der vorderen Wand (304) beabstandet ist, um dazwischen einen Verwirblerdurchgang (118) zu definieren,
einen Satz von Schaufeln (308), der in dem Verwirblerdurchgang (118) breitgestellt ist, der sich zwischen der vorderen Wand (304) und der hinteren Wand (306) erstreckt, wobei der Satz von Schaufeln (308) konfiguriert ist, um einem Fluidvolumen, das durch den Verwirbler (300) strömt, eine tangentiale Komponente zu verleihen,
wobei jede Schaufel (308) des Satzes von Schaufeln (308) von einer radialen Ausrichtung an der vorderen Wand (304) zu einer tangentialen Ausrichtung an der hinteren Wand (306) wechselt, und
einen Aufweitungskegel (212), der sich von dem Verwirbler erstreckt und in einem Winkel (218) relativ zu der Längsachse (110) angeordnet ist;
**dadurch gekennzeichnet, dass**
der Verwirbler (300) die Brennstoffdüse (104) umgibt.

2. Brennstoffdüsen- und Verwirbleranordnung (100) nach Anspruch 1, wobei die vordere Wand (304) in einem Winkel (402) angeordnet ist, der von einer Achse versetzt ist, die orthogonal zu der Längsachse (110) definiert ist.

3. Brennstoffdüsen- und Verwirbleranordnung (100) nach Anspruch 1 oder 2, wobei die radiale Ausrichtung in einer radialen Richtung orthogonal zu der Längsachse (110) definiert ist.

4. Brennstoffdüsen- und Verwirbleranordnung (100) nach Anspruch 3, wobei die tangentiale Ausrichtung in einer Richtung tangential zu der radialen Richtung ist.

5. Brennstoffdüsen- und Verwirbleranordnung (100) für ein Triebwerk (10), die Brennstoffdüsen- und Verwirbleranordnung (100) umfassend:
eine Brennstoffdüse (104), die einen Brennstoffdurchgang (112) einschließt, der eine Längsachse (110) definiert; und
einen Verwirbler (102), umfassend:
eine vordere Wand (400),
eine hintere Wand (404), die von der vorderen Wand (400) beabstandet ist, um dazwischen einen Verwirblerdurchgang (118) zu definieren,
einen Satz von Schaufeln (206), der in dem Verwirblerdurchgang (118) breitgestellt ist, der sich zwischen der vorderen Wand (400) und der hinteren Wand (404) erstreckt, zum Verleihen einer tangentialen Komponente an ein Fluidvolumen, das durch den Verwirbler (102) strömt,
wobei mindestens eine der vorderen Wand (400) und der hinteren Wand (402) in einem Neigungswinkel (402) relativ zu einem Radius angeordnet ist, der orthogonal zu der Längsachse (110) definiert ist; und
einen Aufweitungskegel (212), der sich von dem Verwirbler erstreckt und in einem Winkel (218) relativ zu der Längsachse (110) angeordnet ist;
**dadurch gekennzeichnet, dass**
der Verwirbler (300) die Brennstoffdüse (104) umgibt.

6. Brennstoffdüsen- und Verwirbleranordnung (100) nach einem der Ansprüche 1 bis 5, wobei der Winkel (218) derart negativ ist, dass der Aufweitungskegel (212) konvergiert, oder derart positiv ist, dass der Aufweitungskegel (218) divergiert.

## Revendications

1. Ensemble gicleur de carburant et tourbillon (100) pour un moteur (10), l'ensemble gicleur de carburant et tourbillon (100) comprenant :
un gicleur de carburant (102) comportant un passage de carburant (112) définissant un axe longitudinal (110) ;
un tourbillon (300) comprenant :
une paroi avant (304),
une paroi arrière (306) espacée de la paroi avant (304) pour définir un passage de tourbillon (118) entre les deux,
un ensemble d'ailettes (308), prévu dans le passage de tourbillon (118) s'étendant entre la paroi avant (304) et la paroi arrière (306), l'ensemble d'ailettes (308) étant conçu pour conférer une composante tangentielle à un volume de fluide passant à travers le tourbillon (300),
dans lequel chaque ailette (308) de l'ensemble d'ailettes (308) passe d'une orientation radiale au niveau de la paroi avant (304) à une orientation tangentielle au niveau de la paroi arrière (306), et
un cône d'évasement (212) s'étendant à partir du tourbillon et disposé à un angle (218) par rapport à l'axe longitudinal (110) ;
**caractérisé en ce que**
le tourbillon (300) entoure le gicleur de carburant (104).

2. Ensemble gicleur de carburant et tourbillon (100) de la revendication 1, dans lequel la paroi avant (304) est disposée à un angle (402) décalé par rapport à un axe défini orthogonalement à l'axe longitudinal (110).

3. Ensemble gicleur de carburant et tourbillon (100) selon la revendication 1 ou 2, dans lequel l'orientation radiale est définie dans une direction radiale orthogonale à l'axe longitudinal (110).

4. Ensemble gicleur de carburant et tourbillon (100) selon la revendication 3, dans lequel l'orientation tangentielle est dans une direction tangente à la direction radiale.

5. Ensemble gicleur de carburant et tourbillon (100) pour un moteur (10), l'ensemble gicleur de carburant et tourbillon (100) comprenant :
un gicleur de carburant (104) comportant un passage de carburant (112) définissant un axe longitudinal (110) ; et
un gicleur (102) comprenant :
une paroi avant (400),
une paroi arrière (404) espacée de la paroi avant (400) pour définir un passage de tourbillon (118) entre les deux,
un ensemble d'ailettes (206) disposées dans le passage du tourbillon (118) s'étendant entre la paroi avant (400) et la paroi arrière (404), pour conférer une composante tangentielle à un volume de fluide passant à travers le tourbillon (102),
dans lequel au moins l'une parmi la paroi avant (400) et la paroi arrière (402) est disposée à un angle d'inclinaison (402) par rapport à un rayon défini orthogonalement à l'axe longitudinal (110) ; et
un cône d'évasement (212) s'étendant à partir du tourbillon et disposé à un angle (218) par rapport à l'axe longitudinal (110) ;
**caractérisé en ce que**
le tourbillon (300) entoure le gicleur de carburant (104).

6. Ensemble gicleur de carburant et tourbillon (100) selon l'une quelconque des revendications 1 à 5, dans lequel l'angle (218) est négatif, de sorte que le cône d'évasement (212) converge, ou est positif, de sorte que le cône d'évasement (218) diverge.
